# EUROPÄISCHE PATENTSCHRIFT

(11) **EP 0 722 177 B1**
(45) Veröffentlichungstag und Bekanntmachung des Hinweises auf die Patenterteilung: **29.09.1999**
(21) Anmeldenummer: 95118821.8
(22) Anmeldetag: 30.11.1995
(51) Int. Cl.: H01H 36/00

(54) **Bistabile Schalteranordnung**
Bistable switch assembly
Agencement interrupteur bistable

(30) Priorität: 11.01.1995 DE 29500362 U
(43) Veröffentlichungstag der Anmeldung: 17.07.1996
(73) Patentinhaber: ELB-Füllstandsgeräte Bundschuh GmbH + Co., D-64625 Bensheim (DE)
(72) Erfinder: Öhlenschläger,Manfred, D-64668 Rimbach (DE); Toepel,Hans Joachim, D-68723 Schwetzingen (DE)
(74) Vertreter: Helber, Friedrich G., Dipl.-Ing.

(56) Entgegenhaltungen:
- DE-U- 7 007 531
- DE-U- 9 404 422
- DE-U- 29 500 362
- FR-A- 2 194 964

## Beschreibung

Die Erfindung betrifft eine bistabile Schalteranordnung mit einem in einem Gehäuse angeordneten Schalter, dessen die Umschaltung auslösendes Schaltelement durch ein auf einer drehbar im Gehäuse gelagerten Welle vorgesehenes, als Exzenter ausgebildetes Betätigungselement von der einen in die andere Schaltstellung umschaltbar ist, wobei auf der Welle nahezu rechtwinklig zu ihrer Drehachse ein beidseitig in entgegengesetzte Richtungen von ihr vortretender Stabmagnet angeordnet ist, der durch einen außerhalb des Gehäuses beweglich an diesem vorbeigeführten Schaltmagneten verstellbar ist und in der Nähe der Bahnkurve der Stirnflächen des um die Drehachse drehbaren Stabmagneten im Gehäuse eine weichmagnetische Halteeinrichtung vorgesehen ist, welche durch magnetische Wechselwirkung mit dem Stabmagneten diesen in zwei zueinander versetzten Drehstellungen zu halten vermag und so zur Drehachse der den Stabmagneten haltenden Welle ausgerichtet angeordnet ist, daß bei Ausrichtung einer der Stirnflächen des Stabmagneten mit der Halteeinrichtung in einer der Halte-Drehstellungen der Exzenter das Schaltelement in der einen oder anderen Schaltstellung hält.

Solche durch einen am Gehäuse der Schalteranordnung entlang beweglich geführten Schaltmagneten betätigte bistabile Schalteranordnungen werden beispielsweise zur Niveauregulierung, Überwachung und Anzeige des Füllstands von flüssigen Medien in einem Behälter, und hierbei insbesondere als Grenzschalter zum Aus- oder Einschalten von Füll-bzw. Entleerungspumpen oder Absperrorganen eingesetzt, wobei die Anordnung des Gehäuses der Schalteranordnung beispielsweise an einem Füllstandsrohr des Behälters erfolgt, in welchem der Schaltmagnet auf einem auf dem Flüssigkeitsspiegel aufschwimmenden Schwimmer angeordnet ist.

Dazu sind Schalter bekannt, in denen magnetisch betätigbare bistabile Reed-Kontakte eingesetzt werden. Reed-Kontakte sind allerdings aufgrund ihrer schwachen Schaltströme und -leistungen nur begrenzt in der Lage, elektrische Anlagen, wie Pumpen und Ventile zu schalten. Außerdem sind Reed-Kontakte sehr stoßempfindlich. Auftretende Erschütterungen und Vibrationen können daher zum ungewollten Umschalten des Reed-Kontakts und damit zu Fehlfunkionen führen.

Weiterhin bekannt ist ein bistabiler Kontakt, bei dem beim Schaltvorgang ein drehbarer Magnet seine Lage ändert. Durch die damit verbundene Umkehrung des magnetischen Feldes wird ein mit zwei Hilfsmagneten bestückter Kontaktanker bewegt. Während bei diesem System ein ungewolltes Umschalten praktisch auszuschließen ist, kann jedoch der Kontaktanker durch Vibrationen zum Schwingen und damit zum Kontaktflattern angeregt werden.

Dagegen ist aus dem DE-U- 88 12 036.8 ein bistabiler Schaltkontakt bekannt, bei welchem ein Magnet mittelbar oder unmittelbar auf der verlängerten Achse eines drehbetätigbaren Mikroschalters angeordnet ist. Beim Schaltvorgang kippt der Magnet über die Drehachse von einer Endlage in die andere und verbleibt aufgrund seines Eigengewichts in der geschalteten Stellung. Die Funktionsfähigkeit dieses Systems hängt stark von der Einbaulage ab, wobei selbst in der bestimmungsgemäßen Einbaulage durch Erschütterungen und Vibrationen eine ungewollte Schalttätigkeit erfolgen kann.

Eine verbesserte Ausführung dieses bistabilen Schalters, bekanntgeworden aus dem DE-U- 94 04 422.8, sieht die Verwendung eines drehbar gelagerten Magneten vor, dessen verlängerte Drehachse einen Schaltstift trägt, der beim Schaltvorgang einen Mikroschalter über dessen Schaltzunge betätigt. Dabei ist die Ausgestaltung so getroffen, daß dem im Gehäuse um einen Winkel in der Größenordnung von weniger als 90° verschwenkbar gelagerten Stabmagnet etwa in der Mitte des Schwenkwinkels eines der Stabmagnetarme ein Bremsmagnet mit der Polarität des Stabmagnetarms gegenübergestellt ist. D.h. der Stabmagnetarm wird vom Bremsmagnet abgestoßen und wird in eine seiner Endlagen verschwenkt, wobei die beiden Endlagen des Magneten durch mechanische Begrenzungselemente vorgegeben werden. Die auch dann noch bestehenden Kräfte zwischen dem Stabmagneten und dem Bremsmagnet erzeugen zwar ein Haltemoment in der jeweiligen Endstellung und verhindern dadurch in begrenztem Umfange auch eine ungewollte Umschaltung in den anderen stabilen Schaltzustand infolge von Vibrationen, jedoch ist auch bei diesem System eine gewisse Stoßempfindlichkeit nicht ausgeschlossen, da über die mechanischen Begrenzungsmittel Stoßimpulse auf den drehbaren Magneten übertragen werden können, die eine ungewollte Umschaltung zur Folge haben können. Außerdem ist mit der hohen erforderlichen Vorspannung zwangsläufig eine höhere Betätigungskraft verbunden.

Wenn ein die Abstoßungskräfte des Bremsmagneten und des zugeordneten Stabmagnetarms übersteigendes Schaltmoment auf die den Stabmagneten haltende Drehachse ausgeübt wird, vermag der Stabmagnet die Abstoßungskräfte zu überwinden und wird in die zweite stabile Schalt-Endlage verschwenkt. Die Umschaltung des eigentlichen mechanischen Kontakt-Schalters, d.h. des Mikroschalters, erfolgt dabei mittels eines auf der Drehachse des Stabmagneten angeordneten Schaltnokkens oder -stifts, der eine Schaltzunge des Mikroschalters verstellt. Da Mikroschalter eine vergleichsweise hohe Betätigungskraft für den Schaltvorgang erfordern und bei der bekannten Schalteranordnung zum Umschalten ein relativ kurzer Schwenkweg entgegen der zumindest in der ersten Hälfte des Schaltwegs zusätzlich einwirkenden Abstoßungskraft des Bremsmagneten zu überwinden ist, muß der im Füllstandsrohr auf dem Schwimmer gehaltene Stellmagnet ein hinreichend starkes Magnetfeld entwickeln, um das für die Verschwenkung des Stabmagneten und somit die Betätigung des Mikroschalters erforderliche Schaltkraft zu entwickeln.

Schließlich ist ein Schalter der eingangs erwähnten Art bekannt (DE-U- 70 07 531.9), bei welchem die den drehbaren Stabmagneten infolge magnetischer Wechselwirkung in zwei möglichen Drehstellungen haltende Halteeinrichtung von einer Haltebrücke mit jeweils einer an jedem ihrer Enden vorgesehenen Halteplatte aus ferritischem Werkstoff gebildet wird. Der in diesem Fall als Steuernocken ausgestaltete Exzenter ist dabei so ausgebildet, daß er bei einer Verdrehung des Stabmagneten um einen relativ geringen Winkel von deutlich unter 90° einen an einer federnden Kontaktzunge vorgesehenen Kontakt in Anlage an einen zugeordneten gehäusefesten Kontakt drängt und gleichzeitig einen zweiten an einer mit der ersten Kontaktzunge elektrisch verbundenen Kontaktzunge vorgesehenen Kontakt aus der Kontaktstellung mit einem zweiten Gehäusekontakt frei gibt. Das die Umschaltung auslösende Schaltelement wird also von den elektrisch miteinander verbundenen federnden Kontaktzungen gebildet. Aufgrund des geringen Drehwinkels des Stabmagneten gilt bezüglich der Stoßempfindlichkeit und der erforderlichen hinreichenden Stärke des Magnetfelds zur Erzeugung der erforderlichen Betätigungskraft das gleiche wie bei dem vorstehend beschriebenen bekannten Schalter.

Der Erfindung liegt demgegenüber die Aufgabe zugrunde, eine bistabile Schalteranordnung zu schaffen, welche bezüglich der sicheren Gewährleistung eines Schaltzustands auch beim Auftreten von Vibrationen, Schwingungen oder Stößen weiter verbessert ist, wobei die erforderlichen magnetischen Betätigungskräfte verringert sind, so daß Stellmagneten mit geringerer magnetischer Feldstärke und somit geringerer Masse Verwendung finden können.

Ausgehend von einer Schalteranordnung der eingangs erwähnten Art wird diese Aufgabe erfindungsgemäß dadurch gelöst, daß die den Stabmagneten haltende Welle um wenigstens 180° drehbar im Gehäuse gelagert ist, und daß die Halteeinrichtung von einem einzelnen weichmagnetischen Halteelement gebildet wird, mit welchem - abhängig von der Schaltstellung - abwechselnd jeweils eine der gegenüberliegenden Stirnflächen des Stabmagneten ausgerichtet ist.

Die Sicherung eines Schaltzustands gegen ungewollte Verstellung erfolgt in diesem Fall also durch die von der Polarität des jeweiligen Stabmagnetarms unabhängige magnetische Wechselwirkung zwischen dem weichmagnetischen Halteelement und dem Stabmagnetarm. Der auf einen Winkel von 180° vergrößerte Schwenkwinkel der den Stabmagneten haltenden Welle hat beim Umschalten von der einen in den anderen Schaltzustand eine entsprechende Verringerung des Schaltmoments zur Erzeugung der erforderlichen Schaltkraft zur Folge, wodurch für den Schaltvorgang geringere magnetische Betätigungskräfte erforderlich sind.

Das Schaltelement des Mikroschalters kann in an sich bekannter Weise entweder eine langgestreckte, in den Drehweg des Exzenters geführte Schaltzunge aufweisen oder direkt vom Exzenter betätigt werden.

Die durch die Wechselwirkung zwischen dem dem weichmagnetischen Halteelement jeweils gegenüberstehenden Stabmagnetarm und dem Halteelement erzeugte Anziehungskraft, welche den jeweiligen Schaltzustand gegen versehentliche Umschaltung bei auftretenden Störungen sichert, kann in erfindungsgemäßer Weiterbildung dadurch größenveränderlich ausgebildet werden, daß das weichmagnetische Halteelement radial zur Bahnkurve der Stirnflächen des Stabmagneten abstandsveränderlich im Gehäuse angeordnet ist.

Dies ist beispielsweise dadurch möglich, daß das weichmagnetische Halteelement auf seiner der Bahnkurve der Stirnflächen des Stabmagneten abgewandten Seite einen in einer Bohrung einer Halterung längsverstellbar und in wählbaren Längseinstellungen fixierbar gehalterten Schaft aufweist.

Dazu hat es sich als zweckmäßig erwiesen, den Schaft des Halteelements als Gewindeschaft auszubilden, der in eine mit einem komplementären Gegengewinde versehene Bohrung in der Halterung eingeschraubt ist. Durch mehr oder weniger starkes Einschrauben oder Herausschrauben des Gewindeschafts in die Gewindebohrung der Halterung ist eine stufenlose Verstellung des Abstands des Halteelements möglich.

Die Sicherung des Halteelements in einer gewählten Längseinstellung kann dann entweder durch die Wahl einer entsprechend strammen Passung der Gewinde des Gewindeschafts und der zugeordneten Gewindebohrung erfolgen. Alternativ kann auf den Gewindeschaft zusätzlich eine Kontermutter aufgeschraubt sein, welche gegen die Halterung verspannt wird.

Die Größenveränderlichkeit der Kraft zwischen dem Stabmagneten und dem Halteelement wird bei einer anderen zweckmäßigen Ausgestaltung dadurch erzielt, daß das Halteelement als ein auf einer drehbaren Welle angeordneter Exzenter ausgebildet ist. Die Achse der Welle kann dabei verschieden zur Drehachse der den Stabmagneten haltenden Welle ausgerichtet sein, also insbesondere parallel oder senkrecht dazu. Wichtig ist, daß sich das als Exzenter ausgebildete Halteelement bei Drehung der Welle der Bahnkurve der Stirnflächen des Stabmagneten annähert bzw. sich von ihr entfernt.

Eine einfache Möglichkeit, die Funktionsfähigkeit des Schalters jederzeit prüfen zu können, ergibt sich in Weiterbildung der Erfindung dadurch, daß die den Stabmagneten haltende Welle durch das Gehäuse hindurchgeführt wird und somit von der Gehäuse-Außenseite gedreht werden kann. Dazu kann auf der Gehäuse-Außenseite an der Welle ein Drehschalter angeordnet werden, mittels welchem sich die Welle besonders leicht drehen und sich somit die Funktionsfähigkeit des mittels dieser Welle betätigten Schalters überprüfen läßt.

Werden auf der Gehäuseseite Mittel zur Anzeige des Schaltzustandes angeordnet, so läßt sich dieser jederzeit von außen kontrollieren. Dabei können die Mittel zur Anzeige des Schaltzustandes in besonders einfacher und vorteilhafter Weise dadurch realisiert werden, daß die den Stabmagneten haltende Welle durch das Gehäuse hindurchgeführt wird und an ihrer gehäuseaußenseitigen Stirnfläche eine Markierung zur Anzeige ihrer jeweiligen Lagestellung trägt. Dabei können dann auf der Gehäuse-Außenwand selbst zwei die unterschiedlichen Schaltzustände repräsentierenden Markierungen vorgesehen werden, so daß die Markierung der Welle, welche z.B. als Pfeil ausgeführt sein kann, dann immer auf die eine oder die andere Gehäusemarkierung weist und so den Schaltzustand anzeigt. Es sind aber auch andere Anzeigemittel zur Anzeige des jeweiligen Schaltzustandes möglich, insbesondere eine Anzeige mittels Leuchtdioden.

Weitere Einzelheiten und Vorteile der Erfindung ergeben sich aus der nachfolgenden Beschreibung von drei Ausführungsbeispielen in Verbindung mit den Zeichnungen, und zwar zeigt:
- Fig. 1: eine Ansicht auf eine Flachseite des an einem Füllstandsrohr angesetzten Gehäuses einer erfindungsgemäßen Schalteranordnung, wobei der dem Betrachter zugewandte Gehäusedeckel abgenommen ist, so daß die im Gehäuse vorgesehene Funktionselemente der erfindungsgemäßen Schalteranordnung und ihre Anordnung relativ zueinander ersichtlich sind,
- Fig. 2: eine Ansicht gemäß Fig. 1, wobei jedoch ein anderes Ausführungsbeispiel einer erfindungsgemäßen Schalteranordnungin einem Gehäuse vorgesehen wurde,
- Fig. 3: eine Seitenansicht der Schalteinheit der Schalteranordnung gemäß Fig. 2,
- Fig. 4: eine Draufsicht auf die Schalteinheit gemäß Fig. 3, und
- Fig. 5: eine Draufsicht einer anderen Ausführungsvariante der Schalteinheit.

Sofern nicht anders gesagt, wurden in den Figuren gleichwirkende Teile immer mit der gleichen Bezugsziffer bezeichnet.

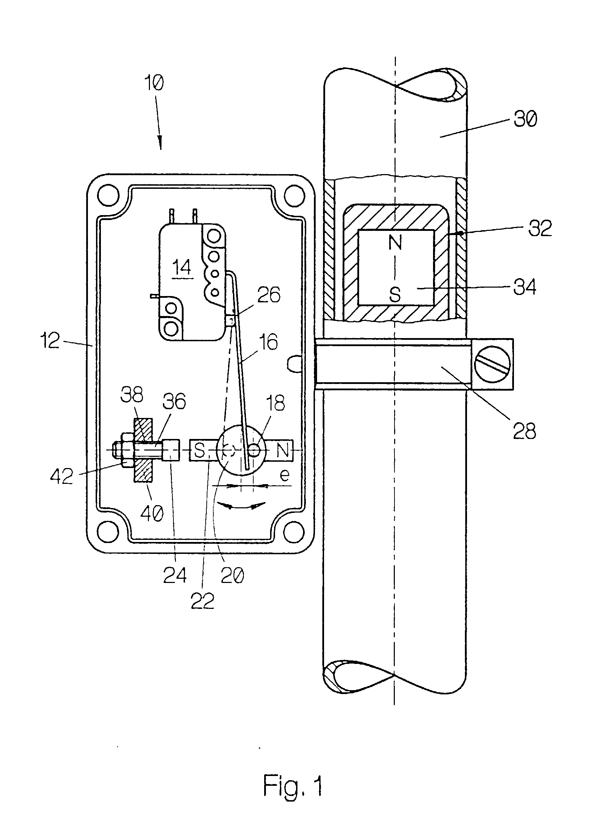

In der Fig. 1 weist die in ihrer Gesamtheit mit 10 bezeichnete Schalteranordnung zwei Funktionsgruppen auf.Zum einen den eigentlichen, in einem Gehäuse 12 angeordneten Mikroschalter 14, dessen Betätigung über eine langgestreckte Schaltzunge 16 erfolgt, deren freier Endbereich an ein als Exenter 18 ausgebildetes Betätigungselement angedrückt ist. Der Exzenter 18 sitzt auf einer drehbar im Gehäuse gelagerten Welle 20, die rechtwinklig zu ihrer Drehachse einen sie durchsetzenden und beidseitig in entgegengesetzte Richtungen vortretenden Stabmagneten 22 haltert. In der in der Zeichnung veranschaulichten Stellung ist der Stabmagnet etwa horizontal ausgerichtet, wobei sein Südpol S zu einem unmittelbar benachbart im Gehäuse angeordneten weichmagnetischen Halteelement 24 weist. In dieser Stellung wird der Stabmagnet durch die magnetische Wechselwirkung mit dem Halteelement gehalten.

Der Exzenter ist dabei in bezug auf die Drehachse der Welle 20 um das Maß e in Richtung zum Nordpol N des Stabmagneten versetzt und die an ihm anliegende Schaltzunge 16 wird somit von einer Federvorspannung des eigentlichen Druckbetätigungselementes 26 des Mikroschalters 14 in der gezeigten Lage an den Exzenter 18 angedrückt.

Das Gehäuse 12 ist mittels einer Spannschelle 28 an der Außenseite eines Füllstandsrohrs 30 befestigt, welches mit einem - nicht gezeigten - Behälter für Flüssigkeit verbunden ist, deren Füllstand im Behälter überwacht werden soll. D.h. der Spiegel der Flüssigkeit im Füllstandsrohr 30 hat die gleiche Höhe wie der Flüssigkeitsspiegel im Behälter. Innerhalb des Füllstandsrohrs schwimmt auf der Flüssigkeit ein die zweite der oben erwähnten Funktionsgruppen bildender Schwimmer 32, der einen Schaltmagneten 34 trägt. Bei fallendem Flüssigkeitsspiegel sinkt der Schwimmer 32 ab und der Schaltmagnet 34 wird in der Nähe des zum Schwimmer gewandten Pols des Stabmagneten 22 in Abwärtsrichtung geführt, wobei die magnetischen Felder der beiden Magnete in Wechselwirkung treten.

In der hier dargestellten Anordnung weist der Südpol S des Schaltmagneten 34 nach unten und es wirkt zunächst zwischen den beiden Magneten eine den Nordpol des Stabmagneten in der dargestellten Lage haltende Kraft, d.h. die Welle 20 und somit der Exzenter 18 werden in der dargestellten Lage gehalten. Sobald der Schwimmer 32 nun so weit absinkt, daß das magnetische Feld des Nordpols N des Schaltmagneten mit dem Nordpol N des Stabmagneten 22 in Wechselwirkung tritt, wird eine die Magneten voneinander abstoßende Kraft erzeugt, wodurch auf die Welle 20 ein Moment ausgeübt wird, welches versucht, die Welle soweit zu drehen, daß dann der Südpol des Stabmagneten 22 zum Nordpol des Schaltmagneten 34 weist. Damit diese Drehung erfolgt, muß jedoch zunächst die zwischen dem Südpol des Stabmagneten 22 und dem Halteelement 24 wirkende magnetische Haltekraft überwunden werden. Durch Auswahl der Magneten 22 und 34 derart, daß die vom Schaltmagneten ausgeübte magnetische Schaltkraft höher als die zwischen dem Stabmagneten 22 und dem Halteelement 24 wirkende Haltekraft ist, ist dies ohne Schwierigkeiten sicherstellbar, zumal die Haltekraft zwischen dem Stabmagneten und dem Halteelement durch Veränderung des Abstands des Halteelements von der Bahnkurve der Stirnflächen des Stabmagneten veränderbar ist.

Diese Veränderung des Abstands des Haltemagnets 24 von der Bahnkurve der Stirnflächen des Stabmagneten 22 ist im dargestellten Fall dadurch möglich, daß auf der stabmagnetabgewandten Seite des Halteelements ein Gewindeschaft 36 angesetzt ist, der in eine Gewindebohrung 38 in einem als Halterung für das Halteelement 24 dienende Haltebock 40 im Gehäuse 12 eingeschraubt ist. Durch eine Kontermutter 42 ist eine gewählte Einstellung des Abstands des Halteelements 24 dann fixierbar.

Es ist ersichtlich, daß durch die zwischen dem Nordpol des Stabmagneten 22 und des Schaltmagneten 34 beim Absinken des Schwimmers in eine unterhalb der Drehachse der Welle 20 liegende Stellung die Welle 20 um etwa 180° herumschlägt, wobei der Exzenter und somit die an ihm angedrückte Zunge 16 die in der Zeichnung strichpunktiert veranschaulichte Lage annehmen, bei welcher das Druckbetätigungselement 26 des Mikroschalters 14 eingedrückt und der Mikroschalter somit umgeschaltet wird.

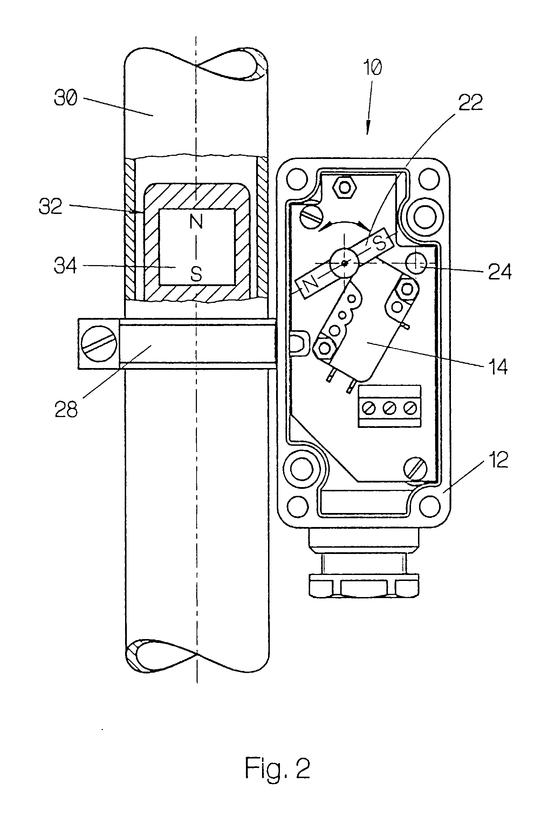

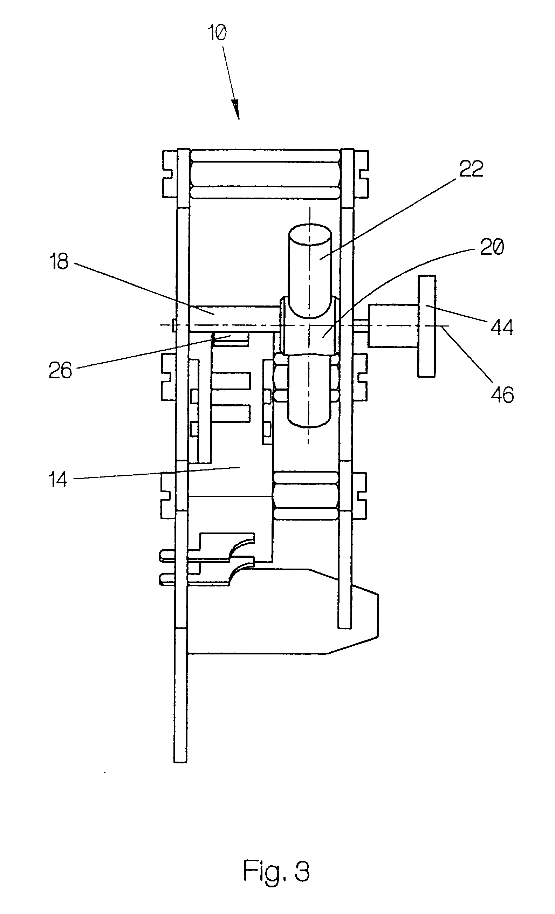

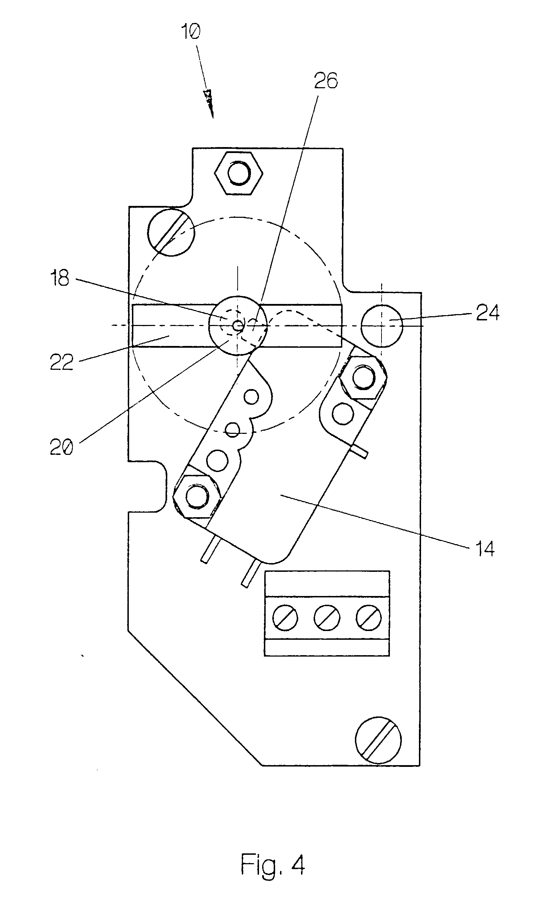

Bei dem in den Figuren 2 bis 4 gezeigten Ausführungsbeispiel einer erfindungsgemäßen Schalteranordnung 10 liegt das als Exenter 18 ausgebildete Betätigungselement direkt an dem Druckbetätigungselement 26 des Mikroschalters 14 an. Der Exenter 18 sitzt wiederum auf der drehbar im Gehäuse gelagerten Welle 20, die rechtwinklig zu ihrer Drehachse 46 den sie durchsetzenden und beidseitig in entgegengesetzer Richtungen vortretenden Stabmagneten 22 haltert. Dabei tritt die Welle 20 aus dem Gehäuse 12 vor, und außerhalb des Gehäuses ist an der Welle 20 ein Funktionstestschalter 44 vorgesehen, mittels welchem die Welle 20 von außen zur Funktionsüberprüfung des Mikroschalters 20 gedreht werden kann. Der Funktionstestschalter 44 der Fig. 3 ist auf seiner der Welle abgewandten Außenfläche mit einer hier nicht sichtbaren Markierung in Form eines Zeigers versehen, welche in den beiden bestimmungsgemäßen Endlagen des Stabmagneten 22 auf zwei ebenfalls nicht sichtbare, die beiden Schaltzustände repräsentierende Markierungen auf der Gehäuse-Außenwand deutet, so daß der Schaltzustand des Mikroschalters 14 jederzeit von außen abgelesen werden kann. Auch bei diesem Ausführungsbeispiel kann problemlos eine Verstellmöglichkeit für die Größe der Kraft zwischen dem Halteelement 24 und dem Stabmagneten 22 vorgesehen werden, beispielsweise dadurch, daß das Halteelement als ein auf einer Welle, Schraube o.dgl. angeordneter Exzenter ausgebildet ist, durch dessen Drehung sich der Abstand zwischen dem Halteelement und dem Stabmagneten vergrößert oder verkleinert, wodurch die Haltekräfte entsprechend verändert werden.

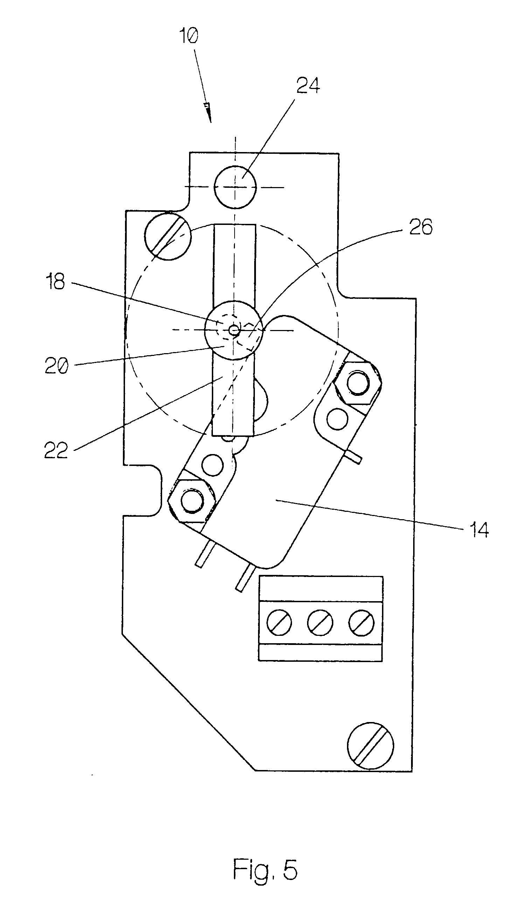

Bei beiden in den Figuren 1 bis 4 gezeigten Ausführungsbeispielen erfindungsgemäßer Schalteranordnungen 10 weist der Schaltmagnet 34 eine axiale Magnetisierung auf, d.h. einer seiner Pole weist im Füllstandsrohr 30 nach oben, während der andere Pol nach unten weist. Demgegenüber ist die in der Fig. 5 gezeigte Schalteranordnung 10 für einen radial magnetisierten Schaltmagneten getroffen, so daß also infolge des geänderten Feldlinienverlaufes die beiden Endstellungen des Stabmagneten 22 gegenüber den Ausführungsbeispielen gemäß den Figuren 1 bis 4 gerade um 90° gedreht erscheinen. Entsprechend ist auch das Halteelement 24 an einer um 90° verrückten Position auf der Grundplatte 50 der Schalterandordnung 10 angeordnet. Wenn sich der Stabmagnet 22 und damit das über den Exenter 18 betätigte Druckbetätigungselement 26 des Mikroschalters 14 in einer seiner Endlagen befindet, verläuft die Achse des Stabmagneten 22 im wesentlichen parallel zu diesem Füllstandsrohr und das Halteelement 24 befindet sich auf der Verlängerung der Achse des Stabmagneten 22. Dabei kann in diesem Ausführungsbeispiel das Halteelement 48 als ein auf einer drehbaren Welle angeordneter Exzenter ausgebildet sein. Durch Drehung dieser Welle nähert sich die wirkende Masse des Halteelementes 24 der Bahnkurve der Stirnflächen des Stabmagneten 22 an oder entfernt sich von ihr, wobei sich die wirkende Masse jedoch immer in einer durch die Drehachse des Stabmagneten 22 und die Längsachse des Stabmagneten 22 in einer seiner beiden bestimmungsgemäßen Endlagen festgelegten Ebene bewegt. Damit kann das Haltelement 24 beliebig gedreht werden, ohne dabei die Richtung der Kraftkomponente der Kraft zwischen dem Halteelement 24 und dem Stabmagneten 22 in einer der beiden bestimmungsgemäßen Endlagen des Stabmagneten 22 in der Drehebene des Stabmagneten 22 zu verändern.

Versuche mit Mustern der erfindungsgemäßen Schalteranordnung haben gezeigt, daß eine absolut zuverlässige Funktion der erfindungsgemäßen Schalteranordnung in dem Sinne gegeben ist, daß einerseits eine exakt auf die eingestellte Füllhöhe ansprechende Umschaltung erfolgt, wobei andererseits auch bei starken einwirkenden Vibrationen oder Stößen eine Fehlschaltung mit Sicherheit vermieden ist.

Es ist ersichtlich, daß im Rahmen des Erfindungsgedankens Abwandlungen und Weiterbildungen der beschriebenen Ausführungsbeispiele verwirklichbar sind, welche sich beispielsweise auf die Art und Weise der Lagerung und Führung des Schaltmagneten 34 beziehen können. Anstelle einer Anordnung in einem direkt auf der zu überwachenden Flüssigkeit schwimmenden Schwimmers kann der Schaltmagnet 34 auch an einem biegsamen Zugorgan hängend gehaltert sein, welches - über Umlenkrollen geführt - mit einem im Innern des Behälters auf dem zu überwachenden Flüssigkeitsspiegel vorgesehenen Schwimmer verbunden ist. Auch die Art und Weise der Ausrichtung und Befestigung des Halteelements 24 in bezug auf den Stabmagneten 22 kann in anderer Weise als die beschriebenen Ausgestaltungen erfolgen. Schließlich sei betont, daß insbesondere die Art der Anzeige des Schaltzustandes auf der Gehäuse-Außenseite anders mittels der auf der Welle 20 vorgesehenen Markierungen erfolgen kann, z.B. mittels einer Leuchtdiode, deren Aufleuchten dem einen und deren Nicht-Aufleuchten dem anderen Schaltzustand entspricht, oder aber mittels zweier, eventuell unterschiedlich gefärbter Leuchtdioden, wobei jeweils entweder die eine oder andere leuchtet und den einen oder den anderen Schaltzustand repräsentiert. Dabei kann dann gleichzeitig auch noch eine generelle Funktionsfähigkeitsanzeige derart vorgesehen sein, daß mit dem Erlöschen beider Leuchtdioden oder aber z.B. dem gleichzeitigen Aufblinken beider Leuchtdioden eine eventuelle Störung des Schalterbetriebes angezeigt werden kann. Wesentlich ist jedenfalls, daß der Stabmagnet 22 um wenigstens 180° drehbar im Gehäuse 12 gelagert ist und das den Stabmagneten in einer eingenommenen Schaltstellung haltende Halteelement 24 aus einem weichmagnetischen Material, z.B. Weicheisen, hergestellt ist, so daß in beiden Schaltstellungen des Stabmagneten die gewünschte Haltekraft erzeugt wird.

## Patentansprüche

1. Bistabile Schalteranordnung (10) mit einem in einem Gehäuse (12) angeordneten Schalter, dessen die Umschaltung auslösendes Schaltelement durch ein auf einer drehbar im Gehäuse gelagerten Welle (20) vorgesehenes, als Exzenter (18) ausgebildetes Betätigungselement von der einen in die andere Schaltstellung umschaltbar ist, wobei auf der Welle (20) nahezu rechtwinklig zu ihrer Drehachse ein beidseitig in entgegensetzte Richtungen von ihr vortretender Stabmagnet (22) angeordnet ist, der durch einen außerhalb des Gehäuses (12) beweglich an diesem vorbeigeführten Schaltmagneten (34) verstellbar ist und in der Nähe der Bahnkurve der Stirnflächen des um die Drehachse drehbaren Stabmagneten (22) im Gehäuse (12) eine weichmagnetische Halteeinrichtung vorgesehen ist, welche durch magnetische Wechselwirkung mit dem Stabmagneten diesen in zwei zueinander versetzten Drehstellungen zu halten vermag und so zur Drehachse der den Stabmagneten (22) haltenden Welle (20) ausgerichtet angeordnet ist, daß bei Ausrichtung einer der Stirnflächen des Stabmagneten (22) mit der Halteeinrichtung in einer der Halte-Drehstellungen der Exzenter (18) das Schaltelement (16) in der einen oder anderen Schaltstellung hält,
**dadurch gekennzeichnet**,
daß die den Stabmagneten (22) haltende Welle (20) um wenigstens 180° drehbar im Gehäuse (12) gelagert ist, und daß die Halteeinrichtung von einem einzelnen weichmagnetischen Halteelement (24) gebildet wird.

2. Schalteranordnung nach Anspruch 1, dadurch gekennzeichnet, daß das Schaltelement des Mikroschalters in an sich bekannter Weise eine langgestreckte, in den Drehweg des Exzenters (18) geführte Schaltzunge (16) aufweist.

3. Schalteranordnung nach Anspruch 1 oder 2, dadurch gekennzeichnet, daß das weichmagnetische Halteelement (24) radial zur Bahnkurve der Stirnflächen des Stabmagneten (22) abstandsveränderlich im Gehäuse (12) angeordnet ist.

4. Schalteranordnung nach Anspruch 3, dadurch gekennzeichnet, daß das weichmagnetische Halteelement (24) auf seiner der Bahnkurve der Stirnflächen des Stabmagneten (22) abgewandten Seite einen in einer Bohrung (38) einer Halterung (40) längsverstellbar gehalterten Schaft (36) aufweist.

5. Schalteranordnung nach Anspruch 4, dadurch gekennzeichnet, daß der Schaft (36) des Halteelements (24) als Gewindeschaft ausgebildet ist, der in die mit einem komplementären Gegengewinde versehene Bohrung (38) in der Halterung (40) eingeschraubt ist.

6. Schalteranordnung nach Anspruch 5, dadurch gekennzeichnet, daß auf den Gewindeschaft (36) zusätzlich eine Kontermutter (42) aufgeschraubt ist.

7. Schalteranordnung nach Anspruch 3, dadurch gekennzeichnet, daß das Halteelement (24) als ein auf einer drehbaren Welle angeordneter Exzenter ausgebildet ist.

8. Schalteranordnung nach Anspruch 7, dadurch gekennzeichnet, daß die Achse der Welle (22) im wesentlichen senkrecht zur Achse der den Stabmagneten haltenden Welle (20) ausgerichtet ist.

9. Schalteranordnung nach Anspruch 7, dadurch gekennzeichnet, daß die Achse der Welle im wesentlichen parallel zur Achse der den Stabmagneten (22) haltenden Welle (20) ausgerichtet ist.

10. Schalteranordnung nach einem der Ansprüche 1 bis 9, dadurch gekennzeichnet, daß die den Stabmagneten (22) haltende Welle (20) durch das Gehäuse (12) hindurch geführt und von der Gehäuseaußenseite drehbar ist.

11. Schalteranordnung nach einem der Ansprüche 1 bis 10, dadurch gekennzeichnet, daß an der Gehäuseaußenseite Mittel zur Anzeige des Schaltzustandes vorgesehen sind.

## Claims

1. Bistable switch assembly (10) including a switch, which is arranged in a housing (12) and whose switching element, which initiates the switching process, may be switched over from one switch position into the other switch position by an actuating element, which is constructed as an eccentric (18) and is provided on a shaft (20), which is rotatably mounted in the housing, whereby arranged on the shaft (20) approximately at right-angles to its axis of rotation there is a bar magnet (22), which projects from it on both sides in opposite directions and which is movable by means of a switching magnet (34), guided movably past it outside the housing (12), and provided in the vicinity of the curved path of the end surfaces of the bar magnet, which is rotatable about the axis of rotation, within the housing (12) there is a soft magnetic retaining device, which, by magnetic interaction with the bar magnet, can retain the latter in two mutually offset rotational positions and is arranged so aligned with respect to the rotary axis of the shaft (20) holding the bar magnet (22) that hwen one of the end surfaces of the bar magnet (22) is aligned with the retaining device in one of the rotational stopping positions the eccentric (18) holds the switching element (16) in one or other switch position, characterised in that the shaft (20) holding the bar magnet (22) is mounted within the housing (12) to be rotatable through at least 180° and that the retaining device is constituted by a single soft magnetic retaining element (24).

2. Switch assembly as claimed in claim 1, characterised in that the switching element of the microswitch has an elongate switching tongue (16) extending in a manner known per se into the rotary path of the eccentric (18).

3. Switch assembly as claimed in claim I or 2, characterised in that the soft magnetic retaining element (24) is arranged radially with respect to the curved path of the end surfaces of the bar magnet (22) within the housing (12) such that its spacing may be altered.

4. Switch assembly as claimed in claim 3, characterised in that on its side remote from the curved path of the end surfaces of the bar magnet (22) the soft magnetic retaining element (24) has a shaft (36) longitudinally movably mounted in a bore (38) in a mounting (40).

5. Switch assembly as claimed in claim 4, characterised in that the shaft (36) of the retaining element (24) is constructed as a threaded shaft, which is screwed into the bore (38), provided with a complimentary counterthread, in the mounting (40).

6. Switch assembly as claimed in claim 5, characterised in that a lock nut (42) is additionally screwed onto the threaded shaft (36).

7. Switch assembly as claimed in claim 3, characterised in that the retaining element (24) is constructed as an eccentric arranged on a rotatable shaft.

8. Switch assembly as claimed in claim 7, characterised in that the axis of the shaft (22) is orientated substantially perpendicular to the axis of the shaft (20) holding the bar magnet.

9. Switch assembly as claimed in claim 7, characterised in that the axis of the shaft is orientated substantially parallel to the axis of the shaft (20) holding the bar magnet (22).

10. Switch assembly as claimed in one of claims 1 to 9, characterised in that the shaft (20) holding the bar magnet (22) passes through the housing (12) and is rotatable from the exterior of the housing.

11. Switch assembly as claimed in one of claims 1 to 10, characterised in that means are provided on the exterior of the housing for indicating the switching state.

## Revendications

1. Dispositif de commutation bistable (10) comportant un commutateur placé dans un boîtier (12) et dont l'élément de commutation qui déclenche la commutation peut être commuté d'une position de commutation à l'autre par un élément de manoeuvre constitué d'un excentrique (18) prévu sur un arbre (20) monté tournant dans le boîtier, sur l'arbre (20) étant placé à peu près perpendiculairement à l'axe de rotation de celui-ci un barreau aimanté (22) qui fait saillie de celui-ci des deux côtés dans des directions opposées et peut être mû par un aimant de commutation (34) qui passe devant lui à l'extérieur du boîtier (12), et à proximité de la trajectoire des surfaces frontales du barreau aimanté (22) tournant autour de l'axe de rotation étant prévu dans le boîtier (12) un dispositif de maintien magnétique doux qui peut, par interaction magnétique avec le barreau aimanté, maintenir celui-ci dans deux positions angulaires différentes et est placé orienté par rapport à l'axe de rotation de l'arbre (20) qui porte le barreau aimanté (22) de façon que, en cas d'alignement d'une des surfaces frontales du barreau aimanté (22) avec le dispositif de maintien dans une des positions angulaires de maintien, l'excentrique (18) maintienne l'élément de commutation (16) dans l'une ou l'autre des positions de commutation,
caractérisé par le fait
que l'arbre (20) qui porte le barreau aimanté (22) est monté dans le boîtier (12) de façon à pouvoir tourner d'au moins 180°, et que le dispositif de maintien est formé par un élément de maintien magnétique doux séparé (24).

2. Dispositif de commutation selon la revendication 1, caractérisé par le fait que l'élément de commutation du microcommutateur présente de façon connue en soi une languette de commutation allongée (16) menée sur le chemin de rotation de l'excentrique (18).

3. Dispositif de commutation selon l'une des revendications 1 et 2, caractérisé par le fait que l'élément de maintien magnétique doux (24) est placé dans le boîtier (12) à distance variable radialement par rapport à la trajectoire des surfaces frontales du barreau aimanté (22).

4. Dispositif de commutation selon la revendication 3, caractérisé par le fait que l'élément de maintien magnétique doux (24) présente sur son côté opposé à la trajectoire des surfaces frontales du barreau aimanté (22) une tige (36) montée mobile longitudinalement dans un trou (38) d'un support (40).

5. Dispositif de commutation selon la revendication 4, caractérisé par le fait que la tige (36) de l'élément de maintien (24) est une tige filetée qui est vissée dans le trou (38), pourvu d'un filetage complémentaire, du support (40).

6. Dispositif de commutation selon la revendication 5, caractérisé par le fait que sur la tige filetée (36) est en plus vissé un contre-écrou (42).

7. Dispositif de commutation selon la revendication 3, caractérisé par le fait que l'élément de maintien (24) est constitué d'un excentrique placé sur un arbre tournant.

8. Dispositif de commutation selon la revendication 7, caractérisé par le fait que l'axe de l'arbre (22) est orienté sensiblement perpendiculairement à l'axe de l'arbre (20) qui porte le barreau aimanté.

9. Dispositif de commutation selon la revendication 7, caractérisé par le fait que l'axe de l'arbre est orienté sensiblement parallèlement à l'axe de l'arbre (20) qui porte le barreau aimanté (22).

10. Dispositif de commutation selon l'une des revendications 1 à 9, caractérisé par le fait que l'arbre (20) qui porte le barreau aimanté (22) traverse le boîtier (12) et peut être tourné depuis le côté extérieur de celui-ci.

11. Dispositif de commutation selon l'une des revendications 1 à 10, caractérisé par le fait que sur le côté extérieur du boîtier sont prévus des moyens d'indication de l'état de commutation.
